# FASCICULE DE BREVET EUROPEEN

(11) **EP 2 277 030 B1**
(45) Date de publication et mention de la délivrance du brevet: **16.05.2012**
(21) Numéro de dépôt: 09745595.0
(22) Date de dépôt: 12.03.2009
(51) Int. Cl.: G01N 21/71

(54) **METHODE DE MESURE DE LA PROPRETE DES BANDES D'ACIER**
VERFAHREN ZUR MESSUNG DER SAUBERKEIT EINES STAHLSTREIFENS
METHOD OF MEASURING THE CLEANNESS OF STEEL STRIP

(30) Priorité: 14.05.2008 BE 200800270
(43) Date de publication de la demande: 26.01.2011
(73) Titulaire: Centre De Recherches Metallurgiques ASBL - Centrum Voor Research In De Metallurgie vzw, 1050 Bruxelles (BE)
(72) Inventeur: MONFORT, Guy, B-4420 Montegnee (BE)
(74) Mandataire: pronovem
(86) Numéro de dépôt international: PCT/EP2009/052926
(87) Numéro de publication internationale: WO 2009/138262

(56) Documents cités:
- JP-A- 5 172 762
- JP-A- 2002 195 950
- BILMES G M ET AL: "A real time method for surface cleanliness measurement" APPLIED PHYSICS B ; LASERS AND OPTICS, SPRINGER, BERLIN, DE, vol. 82, no. 4, 1 mars 2006 (2006-03-01), pages 643-648, XP019337684 ISSN: 1432-0649

## Description

### Objet de l'invention

La présente invention se rapporte à une méthode en ligne pour mesurer la propreté de la surface de tôles ou bandes d'acier.

### Arrière-plan technologique et état de la technique

Lors de la fabrication de tôles d'acier, le processus de laminage à froid génère essentiellement deux types d'impuretés à la surface des tôles : d'une part du carbone de surface, qui provient de la dégradation des huiles de laminage, et d'autre part des fines de fer dont l'origine se trouve dans les interactions avec les cylindres utilisés pour laminer.

Cette pollution de la surface est gênante car elle nécessite un nettoyage plus fréquent des cylindres et les bains de décapage sont plus rapidement pollués. Ceci occasionne évidemment des coûts supplémentaires. Les tôles sales doivent également être recuites plus longtemps, ce qui est aussi plus coûteux. Enfin, dans les étapes ultérieures de galvanisation ou de mise en peinture, ces dépôts se traduisent par des défauts d'adhérence qui ont des conséquences sur la tenue à la corrosion des produits finis.

Pour évaluer la propreté de surface, il existe différentes méthodes qu'on peut classer en deux groupes :
- des méthodes de laboratoire, précises mais « off-line ». Ces méthodes sont basées sur la fluorescence X, l'absorption atomique, la spectrométrie de masse, etc. Elles demandent généralement beaucoup de temps et sont coûteuses à mettre en oeuvre ;
- des méthodes de contrôle en ligne, généralement rapides mais moins précises. Parmi celles-ci, la méthode du "Scotch^{®} Tape Test" (ou Tesa-Test) est la plus connue. Elle consiste à appliquer sur la tôle, de la manière la plus reproductible possible, un morceau d'adhésif, ci-après appelé "Scotch^{®} tape", qui sera ensuite arraché puis collé sur un papier blanc. On mesure alors le pourcentage de lumière réfléchie par le "Scotch^{®} tape" chargé des particules arrachées à la tôle. Ceci se fait soit par comparaison avec des étalons, soit à l'aide d'un appareil spécifique.

Cette dernière méthode dépend cependant de l'opérateur et notamment de la manière dont le "Scotch^{®} tape" est appliqué sur la tôle (vitesse d'application, pression, vitesse d'arrachage, etc.). Il en résulte une importante dispersion des résultats, qui peut atteindre plus de 20% sur la mesure de réflectivité.

Récemment, une méthode semi-automatique a été développée. Elle permet d'appliquer automatiquement le "Scotch^{®} tape" sur la tôle, éventuellement en mouvement, puis de faire, également automatiquement, la mesure du pourcentage de réflectivité. Néanmoins la présence d'un opérateur n'est pas éliminée et la dispersion des résultats est apparemment à peine plus faible. De plus, le caractère discontinu des mesures reste un inconvénient majeur (cf. appareil *CoilScooter-TG* de la firme INNSITEC Laser technologies GmbH - www.innsitec.com).

Plus récemment encore, une méthode complètement automatique basée sur l'absorption de rayonnement infrarouge a été étudiée. A notre connaissance, elle est toujours au stade du développement et n'est, en tous cas, pas largement répandue (voir Krauth P.J., "Contrôle de la propreté des surfaces d'acier", La Revue de Métallurgie - CIT, Juin 2002).

Dans la publication par G.M. Bilmes et al, "A real time method for surface cleanliness measurement", APPLIED PHYSICS B, LASERS AND OPTICS, vol. 82, no. 4, 1 mars 2006, pages 643-648, une méthode de mesure en ligne et automatisée de la propreté de surface d'une bande ou tôle métallique en défilement continu est décrite, comprenant la focalisation d'un faisceau de rayonnement sur la surface de la bande en défilement, la puissance transmise et le diamètre focal du faisceau étant choisis pour obtenir une densité de puissance suffisante pour créer un plasma ou un point chaud qui attaque localement la couche sale, suivi par la mesure par microphone du son produit par l'ablation pour déterminer la propreté de surface.

### Buts de l'invention

La présente invention vise à fournir une méthode de mesure de la propreté de surface des bandes d'acier en ligne et en continu, qui permette de s'affranchir des inconvénients de l'état de la technique.

L'invention a plus particulièrement pour but de fournir une méthode fiable, reproductible et complètement automatisée.

### Principaux éléments caractéristiques de l'invention

La présente invention se rapporte à une méthode de mesure en ligne et automatisée de la propreté de surface d'une bande ou tôle métallique en défilement continu, caractérisée par les étapes suivantes :
- on focalise un faisceau de rayonnement ou de particules ou encore une étincelle sur la surface de la bande en défilement, la puissance transmise et le diamètre focal étant choisis pour obtenir une densité de puissance suffisante pour créer un plasma ou un point chaud qui attaque localement le métal sous forme d'une zone centrale entourée d'une couronne d'oxydation périphérique ;
- on analyse au moyen d'un dispositif de capture optique et d'un traitement d'image les caractéristiques d'une zone englobant ladite couronne oxydée et éventuellement ladite zone centrale ;
- on en déduit une valeur objective indicative de la propreté de surface.

Des modes d'exécution préférés de l'invention reprennent en outre, en combinaison, une ou plusieurs des caractéristiques ci-après :
- ledit faisceau est un faisceau laser ou un faisceau d'électrons ;
- le dispositif de capture optique est une caméra active dans le domaine ultraviolet, visible et/ou infrarouge.
- le traitement d'image comprend une analyse de largeur de la couronne oxydée et/ou de l'intensité de la coloration de celle-ci ;
- des images en couleur capturées sont transformées en niveaux de gris et leurs histogrammes corrigés établis ;
- la luminosité est adaptée dans le traitement d'image pour que les valeurs moyennes des histogrammes correspondant respectivement à une tôle étalon propre et à une tôle étalon sale soient comparables ;
- l'on définit, pour chaque tôle à examiner, une zone englobant ladite zone centrale entourée d'une couronne d'oxydation périphérique et en ce que l'on calcule la valeur moyenne ou la médiane de l'histogramme correspondant à cette zone, la propreté de la tôle étant jugée satisfaisante pour une valeur de moyenne ou de médiane supérieure à une valeur prédéterminée par calibration sur une tôle propre et une tôle sale ;
- la bande ou la tôle métallique est en acier ;
- la vitesse de défilement de la bande ou la tôle métallique est supérieure à 0,5 m/s.

### Brève description des figures

La figure 1 montre une vue de 6 cratères laser sur une tôle propre, après conversion de l'image couleur en niveaux de gris et correction de l'histogramme selon la méthode de la présente invention.

La figure 2 montre une vue de 5 cratères laser sur une tôle sale, après conversion de l'image couleur en niveaux de gris et correction de l'histogramme selon la méthode de la présente invention.

Sur la figure 3, la zone hachurée indique la zone qui a servi à définir l'histogramme local dont la valeur moyenne permet de quantifier le niveau de propreté (cas de la tôle propre).

Sur la figure 4, la zone hachurée indique la zone qui a servi à définir l'histogramme local dont la valeur moyenne permet de quantifier le niveau de propreté (cas de la tôle sale).

La figure 5 est la photographie de départ de la tôle propre.

La figure 6 est la photographie de départ de la tôle sale.

### Description d'une forme d'exécution préférée de l'invention

Le dispositif proposé selon l'invention fait partie de la catégorie des dispositifs de mesure entièrement automatiques. Il peut être placé sur une ligne industrielle et fonctionner sans intervention d'un opérateur.

Le principe en est décrit ci-après.

Un faisceau laser, de préférence pulsé, est focalisé sur la surface de la tôle en défilement. La puissance du laser et le diamètre focal sont choisis de manière à ce que la densité de puissance obtenue sur la tôle soit suffisante pour créer un plasma à la surface de la tôle.

Dans ces conditions, on constate la formation d'une couronne oxydée entourant la zone du plasma. Cette couronne présente une largeur et une coloration brunâtre qui dépendent de la propreté de surface.

En analysant, à l'aide d'une caméra ou de tout autre dispositif équivalent, les caractéristiques de la zone oxydée, on peut en déduire une valeur indicative de la propreté de surface indépendante de la subjectivité d'un opérateur.

Le traitement de l'image consiste en l'analyse de la largeur de la zone affectée et/ou de l'intensité de la coloration de celle-ci.

### Exemple d'application de la méthode

Dans l'exemple qui suit, on a utilisé comme source laser celle qui est incluse dans le TeleLis, appareil laser LIBS de la firme LSA - Laser Analytical Systems & Automation GmbH, Aachen.

Le faisceau laser, d'une énergie de 300 mJ est focalisé à 150 mm sous la surface de la tôle à mesurer, la source étant située à 4 mètres de la tôle. Celle-ci se déplace à une vitesse linéaire d'environ 0,6 m/s. Le laser fonctionne en mode "double pulse" avec une fréquence de répétition de 20 Hz.

A chaque impulsion, un plasma est généré et un micro-cratère est crée à la surface de la tôle. La profondeur de celui-ci est fonction de l'énergie du laser. Autour du cratère, une zone brunâtre plus ou moins foncée apparaît : on a constaté de manière surprenante que l'intensité de sa coloration et sa largeur dépendent de la propreté de surface de la tôle.

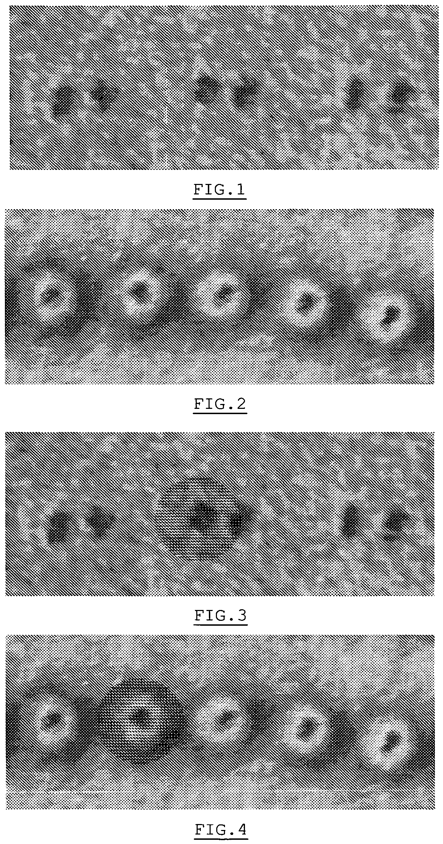

A titre d'exemple, les figures 1 et 2 montrent les images de quelques cratères obtenus, respectivement dans le cas d'une tôle propre et d'une tôle sale. Ces images, présentant des grossissements similaires, ont été transformées en niveaux de gris à partir de photographies en couleur et la luminosité a été adaptée pour que les deux photos présentent une valeur moyenne comparable de leurs histogrammes. Dans le cas représenté, cette valeur vaut 129.

On constate donc que, dans le cas de la tôle sale, une couronne foncée est nettement visible autour de chaque cratère, le point central étant en noir, alors qu'elle n'apparaît pratiquement pas dans le cas de la tôle propre.

Si, dans les deux cas, on délimite une zone bien définie autour d'un cratère (zone hachurée dans les figures 3 et 4) puis si on reprend ensuite les valeurs moyennes de l'histogramme de ces zones, on obtient respectivement une valeur de 100 pour la tôle sale et une valeur de 120 pour la tôle propre.

La différence est encore plus marquée si on se base sur la médiane qui vaut respectivement 88 et 131. Par comparaison, les mesures classiques de réflectivité qui servent à déterminer la propreté de surface donnent des valeurs respectives d'environ 58% et 38%. On notera que les valeurs de pourcentage de réflectivité décroissent d'autant plus la tôle est sale alors que le critère de la moyenne de l'histogramme local croît.

Ces critères basés sur l'histogramme ne sont qu'une des possibilités de quantifier la propreté des tôles sur base d'une analyse automatique de l'image. Des traitements plus sophistiqués et connus de l'homme de métier permettraient une discrimination encore plus poussée. En effet, une faible coloration de la couronne est visible à l'oeil dans le cas de la tôle propre alors que la conversion sommaire en niveaux de gris appliquée comme ci-dessus la fait disparaître complètement, réduisant le pouvoir discriminant de la méthode.

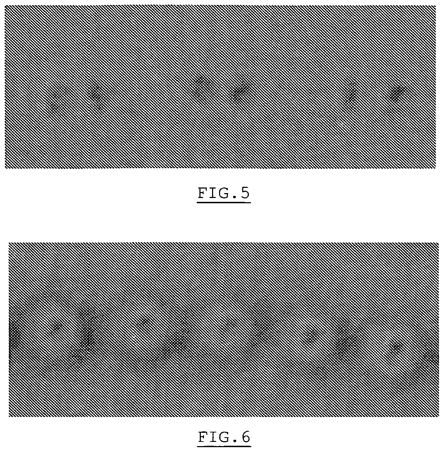

A titre indicatif, les figures 5 et 6 donnent les photos couleur de départ.

### Avantages de la méthode

Cette méthode a l'avantage d'être entièrement automatique et donc de ne pas être tributaire de la dextérité et du jugement d'un opérateur.

Elle peut également fonctionner sur une tôle en défilement pour un contrôle en continu.

Enfin, elle ne demande que du matériel simple et robuste, apte à être utilisé sur des lignes industrielles, à une distance suffisante pour éviter son endommagement en cas d'incident.

## Revendications

1. Méthode de mesure en ligne et automatisée de la propreté de surface d'une bande ou tôle métallique en défilement continu, **caractérisée par** les étapes suivantes :
- on focalise un faisceau de rayonnement ou de particules ou encore une étincelle sur la surface de la bande en défilement, la puissance transmise et le diamètre focal étant choisis pour obtenir une densité de puissance suffisante pour créer un plasma ou un point chaud qui attaque localement le métal sous forme d'une zone centrale entourée d'une couronne d'oxydation périphérique ;
- on analyse au moyen d'un dispositif de capture optique et d'un traitement d'image les caractéristiques d'une zone englobant ladite couronne oxydée et éventuellement ladite zone centrale ;
- on en déduit une valeur objective indicative de la propreté de surface.

2. Méthode selon la revendication 1, **caractérisée en ce que** ledit faisceau est un faisceau laser ou un faisceau d'électrons.

3. Méthode selon la revendication 1, **caractérisé en ce que** le dispositif de capture optique est une caméra active dans le domaine ultraviolet, visible et/ou infrarouge.

4. Méthode selon la revendication 1, **caractérisée en ce que** le traitement d'image comprend une analyse de largeur de la couronne oxydée et/ou de l'intensité de la coloration de celle-ci.

5. Méthode selon la revendication 1, **caractérisée en ce que** des images en couleur capturées sont transformées en niveaux de gris et leurs histogrammes corrigés établis.

6. Méthode selon la revendication 5, **caractérisée en ce que** la luminosité est adaptée dans le traitement d'image pour que la valeur moyenne desdits histogrammes correspondant respectivement à une tôle étalon propre et à une tôle étalon sale soient comparables.

7. Méthode selon la revendication 6, **caractérisée en ce que** l'on définit, pour chaque tôle à examiner, une zone englobant ladite zone centrale entourée d'une couronne d'oxydation périphérique et **en ce que** l'on calcule la valeur moyenne ou la médiane de l'histogramme correspondant à cette zone, la propreté de la tôle étant jugée satisfaisante pour une valeur de moyenne ou de médiane supérieure à une valeur prédéterminée par calibration sur une tôle propre et une tôle sale.

8. Méthode selon l'une quelconque des revendications précédentes, **caractérisée en ce que** la bande ou la tôle métallique est en acier.

9. Méthode selon l'une quelconque des revendications précédentes, **caractérisée en ce que** la vitesse de défilement de la bande ou la tôle métallique est supérieure à 0,5 m/s.

## Claims

1. An in-line, automated method for measuring the surface cleanliness of a metal sheet or strip in continuous motion, **characterised in that**:
- a beam of radiation or of particles or even a spark is focused onto the surface of the strip in motion, the transmitted power and the focal diameter being chosen so as to obtain sufficient power density to create a plasma or hot spot which locally etches the metal in the form of a central zone surrounded by a peripheral oxidation ring;
- the characteristics of a zone encompassing said oxidized ring and possibly said central zone are analyzed by means of an optical image-acquisition device and by image processing;
- an objective value indicative of the surface cleanliness is deduced therefrom.

2. Method according to Claim 1, **characterised in that** said beam is a laser beam or an electron beam.

3. Method according to Claim 1, **characterised in that** the optical image-acquisition device is a camera that is active in the ultraviolet, visible and/or infrared region.

4. Method according to Claim 1, **characterised in that** the image processing comprises an analysis of the width of the oxidation ring and/or of the intensity of its coloration.

5. Method according to Claim 1, **characterised in that** acquired colour images are converted into gray scale and their corrected histograms are established.

6. Method according to Claim 5, **characterised in that** the brightness is adapted in the image processing so that the average values of said histograms corresponding to a clean standard sheet and to a dirty standard sheet, respectively may be compared.

7. Method according to Claim 6, **characterised in that**, for each sheet to be examined, a zone encompassing said central zone surrounded by a peripheral oxidation ring is defined, and **in that** the average value or the median of the histogram corresponding to that zone is calculated, the cleanliness of the sheet being deemed satisfactory for an average or median value greater than a value predetermined by calibration on a clean sheet and on a dirty sheet.

8. Method according to any one of the preceding claims, **characterised in that** the metal strip or sheet is made of steel.

9. Method according to any one of the preceding claims, **characterised in that** the motion speed of the metal strip or sheet is faster than 0.5 m/s.

## Patentansprüche

1. Automatisierte Linien-Messmethode der Oberflächensauberkeit eines kontinuierlich laufenden metallischen Bandes oder Blechs, das durch die folgenden Schritte gekennzeichnet ist:
- Fokalisierung eines Strahlungs- oder Partikelbündels oder auch eines Funkens auf die Oberfläche eines laufenden Bandes, wobei die übertragene Leistung und der Fokusdurchmesser ausgewählt sind, um eine Leistungsdichte zu erhalten, die ausreichend ist, um ein Plasma oder eine Aufblasstelle zu erzeugen, die das Metall lokal in Form einer zentralen Zone, umgeben von einem peripheren Oxidationskranz, angreift,
- Analyse der Merkmale einer Zone, die den oxidierten Kranz und eventuell die zentrale Zone einschließt, mit Hilfe eines optischen Erfassungsmittels und einer Bildverarbeitung,
- Ableitung daraus eines objektiven Werts, der auf die Sauberkeit der Oberfläche schließen lässt.

2. Methode nach Anspruch 1, **dadurch gekennzeichnet, dass** das Strahlenbündel ein Laserstrahlenbündel oder ein Elektronenstrahlenbündel ist.

3. Methode nach Anspruch 1, **dadurch gekennzeichnet, dass** das optische Erfassungsmittel eine Kamera ist, die im ultravioletten, sichtbaren und/oder Infrarotbereich aktiv ist.

4. Methode nach Anspruch 1, **dadurch gekennzeichnet, dass** die Bildverarbeitung eine Breitenanalyse des oxidierten Kranzes und/oder der Intensität der Färbung desselben umfasst.

5. Methode nach Anspruch 1, **dadurch gekennzeichnet, dass** die erfassten Farbbilder in Graustufenniveaus und ihre entsprechenden korrigierten Histogramme umgewandelt werden.

6. Methode nach Anspruch 5, **dadurch gekennzeichnet, dass** die Helligkeit der Bildverarbeitung angepasst ist, damit der durchschnittliche Wert der Histogramme, die jeweils einem sauberen Prüfblech und einem schmutzigen Prüfblech entsprechen, vergleichbar sind.

7. Methode nach Anspruch 6, **dadurch gekennzeichnet, dass** für jedes zu prüfende Blech eine Zone bestimmt wird, die die zentrale, von einem peripheren Oxidationskranz umgebene Zone entschließt, und dass der Durchschnitts- oder Mittelwert des dieser Zone entsprechenden Histogramms berechnet wird, wobei die Sauberkeit des Blechs für einen Durchschnitts- oder Mittelwert über einem Wert, der durch Kalibrierung auf einem sauberen Blech und einem schmutzigen Blech vorbestimmt wurde, als zufriedenstellend betrachtet wird.

8. Methode nach einem der vorangehenden Ansprüche, **dadurch gekennzeichnet, dass** der metallische Streifen oder das Blech aus Stahl sind.

9. Methode nach einem der vorangehenden Ansprüche, **dadurch gekennzeichnet, dass** die Laufgeschwindigkeit des metallischen Streifen oder des Blechs höher als 0,5 m/s ist.
